# EUROPEAN PATENT APPLICATION

(11) **EP 4 385 610 A1**
(43) Date of publication of application: **19.06.2024**
(21) Application number: 22213251.6
(22) Date of filing: 13.12.2022
(51) Int. Cl.: B01D 61/36

(54) **MULTISTAGE DISTILLATION SYSTEM**

(71) Applicant: EvCon GmbH, 85652 Pliening-Landsham (DE)
(72) Inventor: Wenzel, Markus, 85652 Pliening-Landsham (DE)
(74) Representative: Paustian & Partner Patentanwälte mbB

(57) **Abstract**

The invention relates to a multistage distillation system for concentrating a feed liquid, comprising at least one module being assembled by a stack of frame elements, wherein each module comprises at least one stage, such that the system comprises in total a plurality of stages (50, 60) configured to be flowed through in series by a main feed liquid. Each stage of the plurality of stages (50, 60) is configured to generate steam and feed the steam to a subsequent stage. The first stage of the plurality of stages (50, 60) is configured to heat the main feed liquid and/or to be fed with heated main feed liquid. The system further comprises an intermediate cooling device configured to cool the heated main feed liquid before flowing to at least one of the second to last stages of the plurality of serial stages (50, 60).

## Description

### FIELD OF THE DISCLOSURE

The present disclosure is related to a multistage distillation system, in particular for producing a distillate (e.g. sterile water). The multistage distillation system may in particular comprise a modular flow system comprising a plurality of frame elements.

### BACKGROUND OF THE DISCLOSURE

Modular flow systems comprising a plurality of frame elements are known e.g. from EP2427263 (A1) (or US2012038069 (A1) of the same family). The plurality of frame elements can be combined by means of welded web structures to various stacks comprising in each case at least two, in particular at least ten frame elements, in order to form different functional units such as in particular a membrane distillation stage, a steam generator, a condenser, a heat exchanger, a filter and/or a pervaporation stage.

The frame elements comprise in each case an outer frame provided with passage openings and vapor and/or liquid channels as well as a central inner region surrounded by the outer frame. The vapor and/or liquid channels are arranged on the left and right sides of a respective frame element when combined together to form the modular flow system.

Moreover, each frame element is provided on both sides with a welded web structure that delimits, on the one hand, the region comprising the passage openings and the central inner region and, on the other hand, at least two regions, each comprising a vapor and/or liquid channel.

Furthermore EP 2 627 437 B1 describes a multistage membrane distillation device comprising a heating stage, preferably multiple condensing/evaporating stages, and a condensing stage through which a liquid to be concentrated is passed in succession. Each condensing/evaporating stage comprises at least one condensing unit and at least one evaporating unit. Each condensing unit comprises a first steam chamber that is delimited at least partly by a condensation wall, and each evaporating unit comprises a second steam chamber that is delimited at least partly by a steam-permeable liquid-tight membrane wall.

A further device for distilling solutions using a membrane is known from WO 2005/089914 A1.

Still a further distillation apparatus is known from WO2019/233610 A1. The apparatus comprises a plurality of multistage membrane distillation modules, the modules being configured to be flowed through in parallel by a liquid to be concentrated. Each module comprises a plurality of serial condensation/evaporation stages configured to be flowed through in series by the liquid to be concentrated. Each condensation/evaporation stage comprises a plurality of parallel condensation/evaporation elements configured to be flowed through in parallel by the liquid to be concentrated. Each condensation/ evaporation element comprises at least one condensation unit and at least one evaporation unit. The apparatus further comprises at least one of: a centralized heating stage configured to generate steam and to provide the steam to each of the modules in parallel, and a centralized condensation stage configured to receive steam from each of the modules in parallel and to condensate the steam.

There is an increased demand for distilled liquids, e.g. distilled water. It is therefore desirable to reduce their energy consumption of the known systems. However, this requires an efficient thermal separation process.

### SUMMARY OF THE DISCLOSURE

Currently, it remains desirable to provide a multistage distillation system which has an increased productivity and at the same time an economical energy consumption.

Therefore, the present disclosure relates to a multistage distillation system for concentrating a feed liquid, comprising:
at least one module being assembled by a stack of frame elements, wherein each module comprises at least one stage, such that the system comprises in total a plurality of stages configured to be flowed through in series by a main feed liquid. Each stage of the plurality of stages is configured to generate steam and feed the steam to a subsequent stage. The first stage of the plurality of stages is configured to heat the main feed liquid and/or to be fed with heated main feed liquid. The system further comprises an intermediate cooling device configured to cool the heated main feed liquid before flowing to at least one of the second to last stages of the plurality of serial stages (i.e. any one of the stages except the first stage).

Accordingly, by feeding (hot) steam to a subsequent stage and at the same time cooling the main feed liquid before flowing to said subsequent stage, the main feed liquid is colder than or at least as cold as the steam (as generated in the preceding stage). Thus, the main feed liquid can be heated by the steam and the evaporation process of the main feed liquid (as part of the distillation process) can become more efficient.

Therefore, by providing such a system, it becomes possible to increase the heat transfer through the distillation system (in particular through a module) from the heated side (i.e. the first stage) to the cooled side (i.e. the last stage). Accordingly, the energy consumption of the system can be reduced, i.e. necessary heating power can be reduced.

In general, the efficiency of the distillation process can be increased when the heat flow supplied to the first stage (i.e. the hot side of the system) is reused as often as possible for a condensation and evaporation process in the subsequent stages.

In conventional systems, relatively little steam is produced in the first stage compared to the steam production in the last stage. This is in particular due to the circumstance that the (originally cold) main feed liquid consumes most of the heating energy (in order to be heated), such that only few energy remains for evaporation (i.e. production of steam). In addition, the hot main feed liquid leaving the first stage emits heat only successively in the subsequent stages. Consequently, the heat flow is also only successively increased across the subsequent stages.

In contrast, in the present disclosure the heat transfer across the stages can be balanced by the intermediate cooling device. For example, less main feed liquid may be required to be fed to the first stage (in particular in case a cooling feed liquid is added subsequently), such that less energy is consumed for heating the main feed liquid and more energy remains for production of steam. Second, since the heated main feed liquid leaving the first stage is partially cooled again by the main feed liquid, it contributes less to the successively increasing steam production in the subsequent stages. This allows hence to produce more steam in the first stages than in conventional systems. The heat from this additional steam can be reused more frequently to generate new steam in the downstream stages. This makes the process more efficient.

In addition, using frame elements allows assembling the system in a simple, flexible and economic manner. Due to the used frame elements the main feed liquid can be distributed over (i.e. can fan out over) a relatively large active area (40') of the frame element (or a plurality of active areas (40') in case a plurality of evaporation and condensation units are used per stage). The main feed liquid may then be collected again in a channel (13, 16a,b) in order to be fed to the subsequent stage. Therefore, in this channel (13, 16a,b) the entire stream can be cooled with an intermediate cooling device having a relatively simple structure (e.g. in the form of a heat exchanger or a cooling feed supply device, as described below).

In the present disclosure, steam may also be referred to as vapor.

The system may also comprise a plurality of modules connected in series. For example, two modules may each comprise only relatively few stages, so that the modules are relatively short. The modules may then be arranged next to each other if this advantageous in terms of use of space. Such a arrangement does not need to change anything in terms of processing the feed liquid.

The system may be or may comprise a membrane distillation system or membrane distillation apparatus.

The intermediate cooling device may be configured to cool the main feed liquid by heat transfer to a cooling feed liquid and/or by mixing with a cooling feed liquid.

In particular, the cooling feed liquid may be colder than the main feed liquid, such that the main feed liquid can be cooled.

The intermediate cooling device may comprise a feed liquid mixer configured to feed a cooling feed liquid to the main feed liquid before flowing to at least one of the second to last stages.

In other words, the feed liquid mixer may be configured to mix the main feed liquid with the cooling feed liquid, such that the heated main feed liquid is cooled before flowing to at least one of the second or any subsequent stage.

The intermediate cooling device may comprise alternatively or additionally a heat exchanger configured to allow a heat transfer from the main feed liquid to a cooling medium and/or cooling feed liquid before flowing to at least one of the second to last stages.

The intermediate cooling device may be integrated into and/or provided by one or several frame elements. For example, the intermediate cooling device may be integrated into one or several frame elements, in case the cooling device is a heat exchanger.

The intermediate cooling device may be external to or comprises external elements to the frame elements, e.g. one or several tubes or other external feed line. For example, the (external) intermediate cooling device may be or may comprise a Y- or T-tube which combines the cooling feed liquid with the main feed liquid. Alternatively, the (external) intermediate cooling device may be or may comprise a feed channel which feeds the cooling feed liquid into a module (e.g. via a cover plate from a front side of the stack of frame elements of the module) or to one, several or each of the stages. The cooling feed liquid may then be fed with the main feed liquid within the module or stage, respectively.

The system according to the preceding claim, wherein each stage may comprise at least two adjacent frame elements provided by the stack of frame elements. The intermediate cooling device may be integrated into and/or provided by at least one frame element of a stage.

The module may comprise at least one additional frame element between two adjacent stages, wherein the intermediate cooling device is integrated into and/or provided by the additional frame element.

The intermediate cooling device may comprise an integrated heat exchanger integrated into at least one frame element. Such a frame element may also be referred to as a heat exchanger frame element.

The at least one frame element may comprise a first area configured to be flowed through by the main feed and a second area (e.g. corresponding to an inner region according to the present disclosure) configured to be flowed through by the cooling medium and/or cooling feed liquid.

The first and second areas may be e.g. separated by a wall (e.g. a foil, polymer foil or other relatively thin wall) such that heat is transferred from the main feed liquid to the cooling medium and/or cooling feed liquid.

For example, a heat exchanger may be integrated into a frame. The main feed may for instance flow between two walls (e.g. from a first passage opening according to the present disclosure to second passage opening(s) according to the present disclosure or vice versa). The cooling medium and/or cooling feed liquid may flow adjacent thereto (i.e. on the other side of one or two of the walls) between further passage openings according to the present disclosure or vice versa. Thus, this frame element may merely serve as a heat exchanger, without e.g. an evaporation function.

The intermediate cooling device may comprise an external heat exchanger being external to the module and configured to cool the main feed liquid between two stages.

For example, the external heat exchanger may comprise a main feed line being external to the frame elements and connected to at least two different stages such that the main feed liquid is cooled between two stages. Said main feed line be in particular adjacent to a cooling feed line carrying the cooling medium and/or cooling feed liquid such that a heat transfer is possible.

Alternatively, the main feed line may be connected to the cooling feed line (e.g. via a T- or Y-tube as explained above), such that the main feed liquid is mixed with the cooling feed liquid.

The cooling feed liquid may be fed to a heating stage of the system after having been warmed in the heat exchanger.

For example, the heated cooling feed liquid may be returned to a heating stage in the form of a flash chamber (or to the first stage if the main feed liquid is heated there). Consequently, the flash chamber (or first stage), which is basically fed with e unheated main feed liquid, requires less heat energy. It is also possible that the cooling feed liquid may be heated in several stages (e.g. in respective heat exchangers) so that it can be used as heated main feed liquid at the end. Hence, this heated main feed liquid does not require further heating energy (e.g. as added in a flash chamber).

The intermediate cooling device may comprise a feed liquid mixer being at least partially external to the module.

For example, the feed liquid mixer may comprise a cooling liquid line configured to feed the cooling feed liquid, the cooling liquid line being external to the frame elements and connected to at least one opening in the module which is arranged such that the cooling feed liquid is fed to the main feed liquid.

Each stage may comprise at least one evaporation unit and optionally at least one condensation unit.

For example, each unit is formed by one or two or more frame elements.

Each stage may comprise at least one condensation unit comprising a first steam space at least partly limited by a condensation wall (e.g. a foil, polymer foil or other relatively thin wall).

Each stage may comprise at least one evaporation unit comprising a second steam space at least partly limited by a steam-permeable, feed tight membrane wall.

The main feed liquid and the cooling feed liquid may originate from the same source.

The cooling feed liquid may e.g. correspond to the main feed liquid before being heated.

The system may further comprise a heating stage configured to generate steam and feed the steam to the first stage. For example, the heating stage may be configured to heat the main feed liquid and feed it to the first stage.

The heating stage may be or may comprise a vapor compressor configured to generate steam and feed the steam to the first stage.

The system may comprise a feed liquid distribution device configured to: feed the main feed liquid from the source to the heating stage and/or the first stage, and the cooling feed liquid to the intermediate cooling device. For example, the feed liquid distribution device may comprise one or several tubes.

The intermediate cooling device may be configured such that the heated main feed is cooled before flowing to: either each stage of the second to last stages or only some stages of the second to last stages. Accordingly, the main feed liquid does not need to be cooled in every stage, but may also be cooled in only one or some predefined stages (for example in case of a total of ten stages in a module in the third and the seventh stage).

At least one flow channel for the feed liquid to be concentrated may be provided between a condensation unit and an adjacent evaporation unit such that the feed liquid inside the flow channel is heated via the condensation wall and the steam arising from the feed liquid to be concentrated moves into the second steam space.

It is noted that the evaporation unit may comprise a membrane or may operate without a membrane.

The module may comprise between two adjacent stages an intermediate unit configured to feed the cooling feed liquid to the heated main feed liquid.

At least one of or all frame elements may have one or several frame walls defining at least one of the first passage opening, the second passage opening and the further passage openings.

The second passage opening may be optionally connected with first passage opening via a through hole inside a frame wall.

Accordingly, the plurality of stages may be evaporation stages and at least one of the stages may be in addition a condensation stage (i.e. an evaporation and condensation stage). For example, the first stage may be a flash chamber for heating the main feed liquid. Thus, the first stage may be a mere evaporation stage.

Further optional aspects of the distillation system are described in the following.

The present disclosure may further relate to a multistage distillation system, comprising a plurality of multistage distillation modules, the modules being configured to be flowed through in parallel by a liquid to be concentrated. Each module may comprise a plurality of serial condensation/evaporation stages configured to be flowed through in series by the liquid to be concentrated.

Each condensation/evaporation stage may comprise a plurality of parallel condensation/evaporation elements configured to be flowed through in parallel by the liquid to be concentrated. Each condensation/ evaporation element comprises at least one condensation unit and at least one evaporation unit.

The system further desirably comprises at least one of: a centralized heating stage configured to generate steam and to provide the steam to each of the modules in parallel, and a centralized condensation stage configured to receive steam from each of the modules in parallel and to condensate the steam.

Accordingly the multistage distillation system has a hierarchical organization with three levels. On the first and highest level, the system comprises a plurality of parallel multistage distillation modules. On the second (lower) level, the system comprises a plurality of serial condensation/evaporation stages. On the third (lowest) level, the system comprises a plurality of parallel condensation/evaporation elements. A condensation/evaporation element may comprise a first and a second frame element, or more desirably it may be formed by two first frame elements sandwiching a second frame element, as described in the following.

Due to this arrangement the system may comprise up to several thousand condensation/evaporation elements, e.g. by simply combining several thousand first and a second frame elements, respectively.

Furthermore, by providing such an system, it is possible that several modules commonly use a centralized (or single) heating stage and/or a centralized (or single) condensation stage. Therefore the energy consumption of the centralized (or single) heating stage and/or a centralized (or single) condensation stage may be shared by a plurality of parallel modules what leads to an optimized energy efficiency of the system and at the same time (due to the use of more than one module) to a higher total output of the system.

The centralized heating stage generates steam (i.e. a vapor) and provides the steam to each of the modules in parallel. Accordingly the modules (i.e. desirably the respective first stages) are heated with the supplied steam. In comparison to supplying (hot) liquid and generating steam individually in the respective modules (e.g. by using a vapor generator as known e.g. from EP 2 427 263 B1), the present disclosure has the advantage that due to thermodynamics steam will automatically be attracted most by the coldest surface. Hence, a module which is colder than the others will automatically be heated more. As a consequence, the temperature of the modules (i.e. in particular of their respective first stages) is automatically balanced.

In comparison, heating with (hot) liquid requires a very precise control implying high effort and reduced reliability.

The same applies to a centralized condensation stage. Due to thermodynamics the vapors (or steams) generated in the last stage of each module will be attracted by the centralized condensation stage depending on the temperature of the vapors. Hence, a module which generates hotter vapor (or steam) in its last stage will automatically supply more steam to the centralized condensation stage and will therefore be cooled more than the other (colder) modules. As a consequence, the heat of the modules is automatically balanced.

The centralized heating stage may be configured to provide the steam in each module to a first stage of the serial condensation/evaporation stages.

Accordingly, the first stage of each module may be heated by the centralized heating stage.

The centralized heating stage may be configured to provide the steam in each module to the condensation units of the first stage in parallel, in particular for heating said condensation units to a first predetermined temperature.

The centralized heating stage may be configured to heat the feed (i.e. liquid) to be concentrated to a second predetermined temperature being lower than the first predetermined temperature.

Accordingly, the condensation units of a first stage of each module may be heated by the generated steam. Condensation units of subsequent stages may be heated with the steam (vapor) generated in preceding stages.

In other words, the centralized heating stage may heat the liquid to a second temperature which is slightly lower than the temperature of the generated steam. In this way the steam can heat the liquid in the first stage, such that it vaporizes and a distillation is caused.

The centralized heating stage may be configured as a vapor-liquid separator, in particular as a demister.

In this way, the centralized heating stage may heat the liquid in a vapor-liquid separator, in order to generate the steam at a first temperature and heat the liquid to a required (lower) second temperature.

In another or a further aspect, the centralized heating stage may comprise a heating device and an evaporation device. The heating device may comprise a heating liquid space configured to heat a liquid and to supply it to the evaporation device. The evaporation device may comprise a steam space at least partly limited by a mesh tab and/or a steam-permeable, liquid-tight membrane wall such that the steam arising from the liquid moves through the mesh tab and/or the membrane wall into the plurality of multistage distillation modules via a plurality of parallel steam passages.

The centralized heating stage may comprise a single heating device and/or a single evaporation device.

Accordingly, the heating stage may be centralized by having only one heating device and/or one evaporation device.

The centralized condensation stage may be configured to receive steam from a last stage of the serial condensation/evaporation stages of each module.

The centralized condensation stage may be configured to receive steam from the evaporation units of the last stage of each module in parallel, in particular for cooling said evaporation units to a third predetermined temperature being lower than the first and the second predetermined temperatures.

Accordingly, the evaporation units of a last stage of each module may be cooled by the centralized condensation stage. Evaporation units of preceding stages may be cooled by subsequent stages (i.e. the condensation units of subsequent stages).

The centralized condensation stage may comprise a cooling device with a cooling liquid space and a condensation device with a steam space, the spaces being separated by a liquid-tight, heat-conducting wall, the steam space being connected to the last stage of each module in parallel via a plurality of respective steam passages.

The centralized condensation stage may comprise a single cooling device with a single cooling liquid space and/or a single condensation device with a single steam space.

Accordingly, the condensation stage may be centralized by having only one cooling liquid space and/or a single condensation device with a single steam space.

Each of the condensation units may comprise a first steam space at least partly limited by a condensation wall, in particular a film. Accordingly, a condensation unit may be a first frame element, as described above.

Each of the respective evaporation units may comprise a second steam space at least partly limited by a steam-permeable, liquid tight membrane wall. Accordingly, a evaporation unit may be a second frame element, as described above.

At least one flow channel (i.e. a feeding area) for the liquid to be concentrated may be provided between a condensation unit and an adjacent evaporation unit such that the liquid inside the flow channel is heated via the condensation wall and the steam arising from the liquid to be concentrated moves through the membrane wall into the second steam space.

In each condensation/evaporation stage the evaporation units and condensation units may be arranged, in particular stacked, alternately.

The evaporation units may have steam outlet passages (i.e. vapor and/or liquid channels) connected with another, in particular facing one another and/or being aligned with each other, The condensation unit may have steam inlet passages (i.e. other of the two vapor and/or liquid channels) connected with another, in particular facing one another.

Accordingly, the evaporation and condensation units may be stacked alternately. By this configuration a set of parallel connected evaporation and condensation units, i.e. of evaporation and condensation elements, may be obtained.

The steam outlet passages of the evaporation units of a preceding stage may be connected to the steam inlet passages of the condensation units of a successive stage for forming a steam channel providing steam from the preceding stage to the successive stage.

Said units may be in particular arranged such that the respective steam outlet passages of the preceding stage and the respective steam inlet passages of the successive stage face one another.

This is e.g. possible by turning the frame elements of a subsequent stage around their vertical symmetry axis.

The evaporation units may comprise passage openings facing the steam inlet passages of the condensation units.

The condensation units may comprise passage openings facing steam outlet passages of the evaporation units.

Said passage openings may correspond to vapor and/or liquid channels which are not connected to the inner region by channel openings.

More desirably in an evaporation unit the steam outlet passage and the passage opening may be symmetrical, and/or in an condensation unit the steam inlet passage and the passage opening may be symmetrical.

The steam outlet and the steam inlet may each correspond to a vapor and/or liquid channel which is connected to the inner region by channel openings.

Each condensation/ evaporation element may comprise a single stack of frame elements providing the respective condensation units and evaporation units of the condensation/ evaporation element. For example, a condensation/ evaporation element may be formed by two condensation units sandwiching an evaporation unit. In case of a stack of alternating condensation and evaporation units, a condensation unit may hence be shared by two adjacent condensation/ evaporation element.

Each condensation/evaporation stage may be formed by a single stack of frame elements providing the parallel condensation/ evaporation elements.

Each module may be formed by a single stack of frame elements providing the serial condensation/evaporation stages.

The system may be configured as a modular flow system comprising a plurality of frame elements. In particular each of the modules may form a modular flow system. The different functional units such as in particular a respective condensation unit or a respective evaporation unit may be each provided in the form of such a frame element, with the frame elements preferably being provided with web structures via which they can in particular be connected to one another for forming a condensation/ evaporation stage. Each frame element may comprise an inner region which is surrounded by an outer frame and which is preferably provided with an in particular grid-like spacer on whose two sides in particular a respective functional surface, preferably a film or a membrane, is applied for forming a respective steam space, a respective heating liquid space or a respective cooling liquid space.

Finally, the present disclosure may relate to a multistage distillation system, comprising: a plurality of multistage distillation modules, the modules being configured to be flowed through in parallel by a liquid to be concentrated, wherein: each module comprises a plurality of serial condensation/evaporation stages configured to be flowed through in series by the liquid to be concentrated, each condensation/evaporation stage comprises a plurality of parallel condensation/evaporation elements configured to be flowed through in parallel by the liquid to be concentrated, and each condensation/ evaporation element comprises at least one condensation unit and at least one evaporation unit, wherein each module is formed by a single stack of frame elements.

Accordingly, each module may be arranged as a single stack. Consequently, the heating steam (e.g. generated by a centralized heating stage) can be easily supplied to each module. The heating steam may namely be supplied only to the first frame element of the module stack (and hence to the parallel condensation units of the first stage of the module stack). The same applies to the steam generated in the last stage which may be supplied e.g. to a centralized condensation stage. The overall structure of the system can thus be simplified and made more compact what enhances its efficiency, in particular with regard to the energy consumption.

The centralized heating stage and/or the centralized condensation stage may be external to the modules, e.g. to the single stacks of frame elements forming the modules. The centralized heating stage and/or the centralized condensation stage may be connected to the modules by e.g. pipes, tubes and/or hoses.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

### BRIEF DESCRIPTION OF THE DRAWINGS

Fig. 1 shows a schematic representation of a conventional multistage distillation system;
Fig. 2 shows second schematic representation of a conventional multistage distillation system with exemplary temperature values of the vapor and feed liquid in the system;
Fig. 3 shows a schematic exemplary diagram of a heat flow in the different stages of a conventional multistage distillation system;
Fig. 4A shows a schematic representation of the principle design of a distillation system where cooling feed liquid is added to the main feed liquid according to embodiments of the present disclosure;
Fig. 4B shows a schematic representation of the principle design of a distillation system where the intermediate cooling device comprises a heat exchanger according to embodiments of the present disclosure;
Fig. 4C shows a schematic representation of a distillation system having several modules in series according to embodiments of the present disclosure;
Fig. 4D shows a schematic representation of a distillation system having more than two stages with an intermediate cooling function according to embodiments of the present disclosure;
Fig. 4e shows a schematic representation of the principle design of a distillation system according to embodiments of the present disclosure with exemplary temperature values of the vapor and feed liquid in the system;
Fig. 5 shows a schematic representation of the principle design of the frame elements according to embodiments of the present disclosure;
Fig. 6 shows a schematic representation of a first frame element in particular with vapor and/or liquid channels according to embodiments of the present disclosure;
Fig. 7 shows a schematic representation of a second frame element in particular with vapor and/or liquid channels according to embodiments of the present disclosure;
Fig. 8A shows a schematic representation of the vapor and liquid flow in a first frame element according to embodiments of the present disclosure;
Fig. 8B shows a schematic representation of the feed flow in between a first and a second frame element according to embodiments of the present disclosure;
Fig. 8C shows a schematic representation of the vapor and liquid flow in a second frame element adjacent to the first frame element according to embodiments of the present disclosure;
Fig. 9A shows a schematic representation of a first frame element in particular with liquid passages according to embodiments of the present disclosure;
Fig. 9B shows a cross section of the first frame element of Fig. 9A along the line B-B;
Fig. 9C shows a cross section of the first frame element of Fig. 9A along the line C-C;
Fig. 10 shows a schematic representation of a second frame element in particular with liquid passages according to embodiments of the present disclosure; and
Fig. 11 shows a schematic representation of a multistage distillation system, in particular comprising a modular flow system, according to embodiments of the present disclosure.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

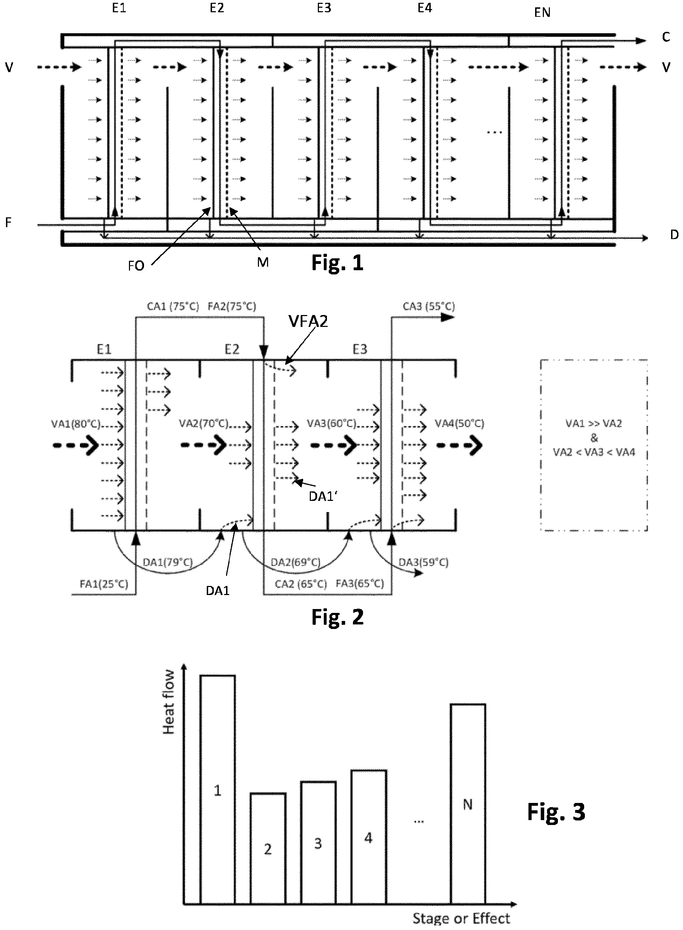

Fig. 1 shows a schematic representation of a conventional multistage distillation system. The system comprises a plurality of stages E1 to EN (i.e. N effects). Each stage may be configured for a thermal separation process. For example, each stage may be an evaporation and condensation stage comprising a membrane M and a condensation foil FO allowing a membrane distillation process. A produced distillate D may be guided serially across the stages.

The system is fed at the first stage E1 with (relatively hot) vapor V. This side of the system may thus also be referred to as the "hot side". On the other side, i.e. the "cold side" at stage N, the vapor outlet may be connected to a condenser, in order to cool the system, i.e. create a temperature difference across the system.

Moreover, the system is fed with a feed F (i.e. feed liquid, e.g. salt water) to be distilled. The feed is running serially through the stages and (at least a part of it) is distilled in each stage by membrane distillation, and leaves the system as a concentrate C. Also the feed may be heated before entering the system. Alternatively, the feed may be only heated in the first stage E1 (i.e. by the hot vapor). The vapor produced in a stage n by the distillation process is forwarded to the subsequent stage n+1, in order to heat said stage n+1.

As a first problem, the multistage distillation process has only a relatively low efficiency when a cold feed is fed to the conventional system.

Second, an efficient thermal separation process requires a good heat transfer through the distillation module from the hot side (stage 1) to the cold side (stage N). The optimum condition for the heat transfer would be that the heat flow during condensation in stage 1 (Q_1) corresponds to the heat flows during condensation in the subsequent stages (Q_2...N), i.e. Q_1 =! Q_2 =! Q3 =! ... =Q_N. The incoming heat flow would be reused in the best possible way, maximizing the process efficiency with the number of stages. However, this optimum condition is conventionally not reached, as explained in context of the example of fig. 2.

When a cold feed is fed to the system, a large preheating power becomes necessary. The whole cold feed stream has to be heated (e.g. in the first stage) before steam can be generated (to be fed e.g. to the second stage). This is conventionally done either in the first stage or by an external heating stage (not shown). Accordingly, the heating power required for the preheating (= condensation power of the incoming steam) is not available for the evaporation of feed as explained in context of the following example.

Fig. 2 shows a second schematic representation of a conventional multistage distillation system with exemplary temperature values of the vapor and feed liquid in the system.

In this example, the conventional system is fed in its first stage E1 (in particular at its condensation wall) with a hot vapor VA1 of 80°C and (between the condensation wall and a membrane) with a cold feed FA1 of 25°C. Accordingly, the cold liquid is heated to 75°C what consumes an important amount of heating energy. The heated liquid CA1 / FA2 is fed to the second stage E2. At the same time, vapor VA2 is generated in the first stage (at the membrane), which however has a temperature of (only) 70°C. Said steam is fed to the second stage and heat the condensation wall of the second stage.

Furthermore, the heated liquid CA1 / FA2 cools from 75°C to 65°C when passing the second stage. This cooling process leads to a flash energy, which is transmitted to the subsequent stage E3 in the form of an increased heat flow due to the additional amount of vapor VFA2 (schematically shown in fig. 2 as a dashed "vapor" arrow).

Moreover, the heat flow from stage E2 to E3 is additionally increased by flash energy VDA1 resulting from the distillate DA1 which is consequently cooled from 79°C to 69°C (cf. DA2). Said additional heat flow in the form of the additional amount of vapor VDA1' is schematically shown in fig. 2 as a dashed "vapor" arrow.

The described process is continued across the further stages, wherein fig. 2 shows respective exemplary values of the vapor and feed.

As can be seen, this process leads to an uneven/unbalanced heat flow across the effects: The heat flow of the generated steam increases in each effect, because heat is released during the temperature adjustment of the feed and the distillate in each subsequent (and thus colder) stage. In particular, the (volume) amount of vapor VA1 supplied to the first stage is much larger than the vapor VA2 produced by the first stage. This is due to the fact that most of the heating energy is consumed by the main feed liquid Fa to be heated from 25°C to 75°C. Moreover, the amount of vapor produced in the subsequent stages is successively increased, i.e. VA2 < VA3 < VA4 (schematically shown in fig. 2 by the number of dashed "vapor" arrows). This principle is also shown and explained in context of the following diagram.

Fig. 3 shows a schematic exemplary diagram of a heat flow in the different stages of a conventional multistage distillation system.

The diagram in particular illustrates a qualitative representation of the heat flow of each stage within the distillation process, in particular how the heat flow can be used a conventional multistage distillation system.

In first stage 1 (or external heating stage) the heat flow is used for heating the feed and generation of vapor. The heat flow is hence relatively high. At the same time, in the first stage 1 the generated vapor is relatively small.

In the subsequent stages 2 to N the heat flow is successively increased from stage to stage, as the hot entering feed and the hot distillate are release energy due to the temperature reduction from stage to stage. In particular, the generated vapor amount in a stage n is formed from the condensation energy (of the vapor received from stage n-1) and the flash energy from the feed which cooling when passing the stage n. Thus, the generated vapor becomes more in each stage. this generated vapor is then fed to the stage n+1. Consequently, also the heat flow in stage n+1 is increased by the additional flash energy.

Accordingly, the problem can be observed that the heat flow required for preheating the feed is only gradually released in the subsequent stages again. The "bound" preheat flow cannot be used in these subsequent stages.

Therefore, in particular in the second stage and its following stages the heat flow is relatively small, so that these stages become inefficient. The above-mentioned optimum condition cannot be reached by far.

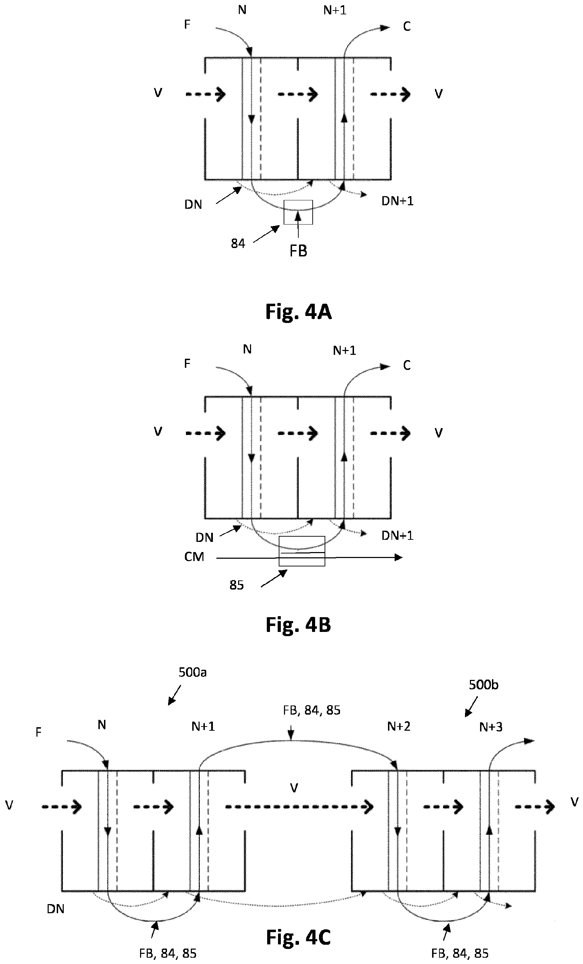

Fig. 4A shows a schematic representation of the principle design of a distillation system according to embodiments of the present disclosure.

The system may be a multistage distillation system for concentrating a feed liquid. The system comprises at least one module (e.g. being assembled by a stack of frame elements), wherein each module comprises at least one stage, such that the system comprises in total a plurality of stages N, N+1 configured to be flowed through in series by a main feed F. Each stage N, N+1 is configured to generate steam (i.e. vapor) V and feed the steam to a subsequent stage. The first stage 1 is configured to heat the main feed F (e.g. by received steam V) and/or to be fed with heated main feed liquid (e.g. originating from an external heating stage). The distillate DN, DN+1 resulting from the cooled steam in a stage N, N+1 is guided to the subsequent stage, such that it can transfer heat energy to said subsequent stage, as explained above.

The system further comprises an intermediate cooling device 84 configured to cool the heated main feed before flowing to the second stage N+1. In the shown example, a cooling feed FB is fed by the intermediate cooling device to the main feed before flowing to the second stage N+1. The intermediate cooling device may thus comprise or be a cooling feed supply device 84.

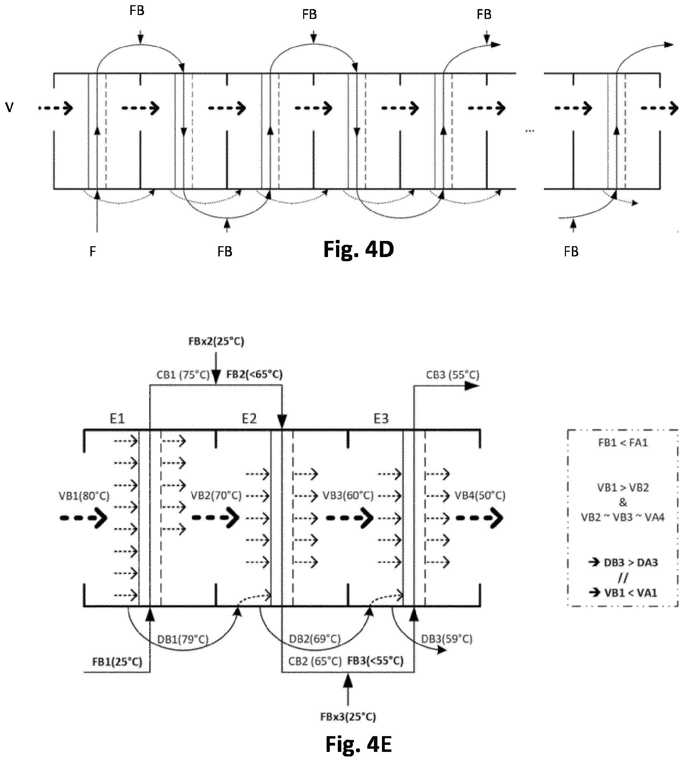

The technical effect of this concept is explained in context of the example of fig. 4E.

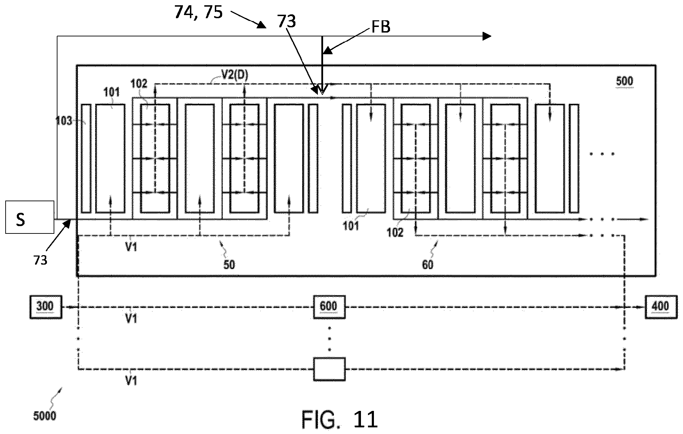

Fig. 4B shows a schematic representation of the principle design of a distillation system where the intermediate cooling device comprises a heat exchanger according to embodiments of the present disclosure. The system of fig. 4B principally corresponds that one shown in fig. 4A. However, the intermediate cooling device may comprise (in addition or instead of the cooling feed supply device 84) a heat exchanger 85 configured to allow a heat transfer from the main feed F to the cooling medium CM (e.g. through a relatively thin wall or another separation structure which allows an efficient heat transfer), before the main feed flows to the second stage N+1. As described above and in context of fig. 11 the heat exchanger may be external to the frame elements constituting the stages or integrated into the frame elements.

Fig. 4C shows a schematic representation of a distillation system having several modules in series according to embodiments of the present disclosure. The system of fig. 4B principally corresponds that one shown in fig. 4A or fig. 4B. However, the system may comprise a plurality of modules 500a, 500b connected in series with regard to the steam V and/or the main feed liquid F. Each module may comprise one or several stages. Again, the system comprises an intermediate cooling device, e.g. between adjacent stages. Each of said intermediate cooling device may be or may comprise a feed supply device 84 and/or a heat exchanger 85. In particular, it is also possible that an intermediate cooling device is arranged between the two modules (and thus optionally external to the modules). This intermediate cooling device may be integrated into frame elements arranged between the frame elements of the two modules, or in an external device.

Fig. 4D shows a schematic representation of a distillation system having more than two stages with an intermediate cooling function according to embodiments of the present disclosure. The system of fig. 4B principally corresponds that one shown in fig. 4A, fig. 4B or 4C. The figure shows a module of the system which comprises more than two stages and also more than two intermediate cooling devices. The intermediate cooling devices may also be part of a feed liquid distribution device, as described in context of fig. 11.

Fig. 4e shows a schematic representation of the principle design of a distillation system according to embodiments of the present disclosure with exemplary temperature values of the vapor and feed liquid in the system. The example principally corresponds that one of fig. 2 but uses a system according to the present disclosure.

In the shown example, a membrane distillation system comprises three stages connected in series. Cold feed of 25°C flows into the first stage and gets a balanced temperature of 75°C as a function of the temperatures between inflowing vapor VB1 of 80°C and the outflowing vapor VB2 of 70°C. The feed is partially evaporated through the membrane. There remains the concentrate of the feed, which is transferred to the second stage. Moreover, also the condensed vapor of the first stage is transferred to the second stage.

Conventionally, there would now occur the problem that this concentrate CB1 and the condensate DB1 from the first stage are warmer (75°C and 79°C) than the temperature of the vapor VB2 (i.e. 70°C) supplied to the second stage.

However, according to the present disclosure the concentrate (i.e. the feed or main feed liquid according to the present disclosure) from the first stage is cooled by an intermediate cooling device before entering the second stage, e.g. by mixing the concentrate with cold feed FBx2 of e.g. 25°C. The resulting feed FB2 may thus have a temperature of less then 65°C. Accordingly, the feed FB2 can be colder that the vapor VB2 (i.e. 70°C) supplied to the second stage.

Accordingly, since the feed FB2 is colder than the vapor VB2, the additional heat from the distillate generated in the first stage (i.e. the vapor VB2) can be used to heat the feed FB2 passing the second stage. As a consequence, the heat flow across the stages can be equalized (i.e. balanced). Furthermore the structural complexity of the intermediate cooling device is quite limited. In particular, the intermediate cooling device may be provided by a simple tube or other liquid line feeding cold feed from e.g. the same source as the main feed FB1. In particular, no heat exchanger is required for heat utilization of the distillate resulting from the first stage.

Overall, with the same feed flow and distillate yield of the process, less feed needs to be heated to the maximum temperature of the process (in the present example 75°C). This reduces the energy requirement of the process compared to a conventional process without an intermediate cooling device.

An intermediate cooling device may cool the main feed before one, several or all stages of the system (i.e. concerning the second to last stage). For example, cold feed may be added to the main feed before it enters the respective stages.

Accordingly, the intermediate cooling device may not be implemented in every stage, but only in individual stages, in order to reduce the effort for the distribution of the cooling feed.

Furthermore the stages may comprise a plurality of parallel or serial evaporation and condensation units and described in the following examples.

Moreover, the concept of using an intermediate cooling device also works in processes where no membrane is used for evaporation.

A further exemplary multistage distillation device assembled by a stack of frame elements 101, 102 is described in context of fig. 11. However, at first the features of the frame elements 101, 102 are described which may form the distillation system.

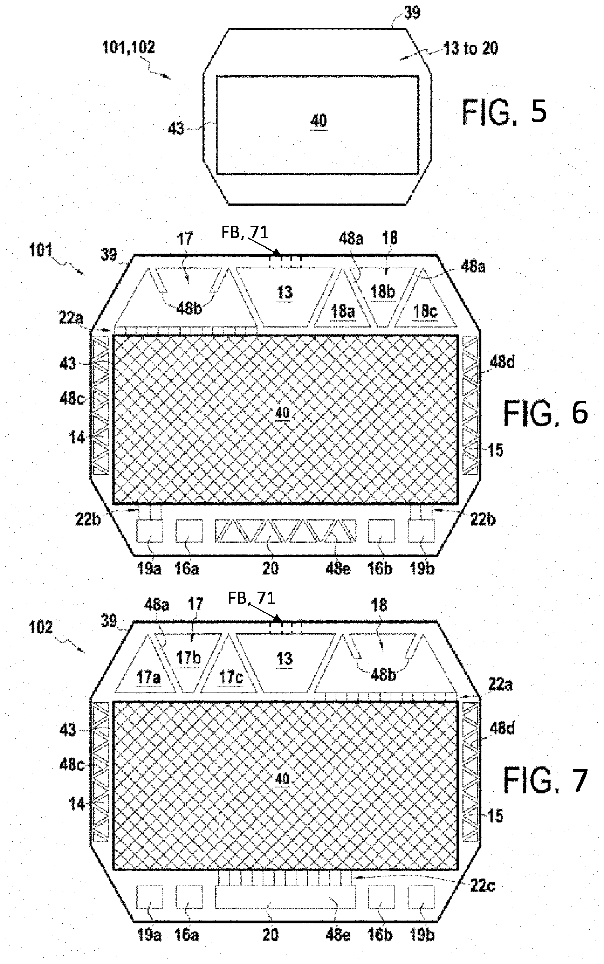

Fig. 5 shows a schematic representation of the principle design of the frame elements according to embodiments of the present disclosure. The frame element is shown in a front view. The frame elements 101, 102 have an outer frame 39 and an inner frame 43.

Accordingly, the outer frame surrounds the inner frame. The inner frame encases (i.e. borders or defines in its inside) an inner region which desirably is used as an active area of the frame element (as described in more detail in other passages of the present disclosure).

Hence, there remains an available area between the outer frame and the inner frame. In this available area passage openings and vapor and/or liquid channels are arranged.

This configuration leads to a more efficient utilization of the total area inside the frame element, as the complete area between outer and inner frame may be utilized for passage openings and channels. For example, the vapor and/or liquid channels can have an increased size what leads to a higher possible output and efficiency of the modular flow system, as described in other passages of the present disclosure.

The inner frame 43 may comprise a rectangular form. The outer frame may comprise a octagonal form, more desirably an octagonal form. In other words, the frame element may have a octagonal shape. Accordingly, the form of the outer frame may approximate a circular form, when having an octagonal form. Therefore the pressure inside the frame element can be balanced (equalized) what reduces the maximum pressure and hence allows thinner walls and increased openings, channels and inner region.

The frame elements 101, 102 may be made of a plastic, i.e. a synthetic material.

Fig. 6 shows a schematic representation of a first frame element 101 in particular with vapor and/or liquid channels according to embodiments of the present disclosure.

The frame element 101 is shown in a front view in the orientation it has when being stacked in a modular flow system. Accordingly, vapor and/or liquid channels 17, 18 are arranged above the inner region 40 in the modular flow system (i.e. desirably with regard to the gravitational direction pointing downwards).

Desirably the vapor and/or liquid channels have a trapezoidal form. In this case they can efficiently fill the area above the (desirably rectangular) inner region in a frame element having a octagonal form. Thus the vapor and/or liquid channels can efficiently use the space in the frame element above the inner region 40. Consequently the frame element can have an outer shape which converges toward a circle form (e.g. by having the form of a octagon). In a circle form the pressure inside the frame element is ideally balanced. Therefore, the frame configuration of the present disclosure allows a reduced material use (i.e. thinner walls), as the maximum pressure in the frame element can be reduced compared to e.g. an elongated frame element form. As a further consequence, due to the material reduction the relative size of the inner region, the channels and passage opening can be increased, what ameliorates the efficiency of the modular flow system.

The cross-sectional area ratio of at least one of the vapor and/or liquid channels 17, 18 of a frame element 101, 102 with regard to the central inner region 40 may be at least 13%, more desirably 15%. In other words, the cross-sectional area ratio of the entirety of vapor and/or liquid channels 17, 18 with regard to the central inner region 40 may be at least 26%, more desirably 30%. It is noted that the schematic figures do not necessarily represent these dimensions correctly.

Accordingly, the relative sizes of the vapor and/or liquid channels may be increased in comparison to the systems of the prior art. This is possible due to the new arrangement of the channels above the inner regions what allows a more balanced pressure inside the frame element and hence a decreased maximum pressure. In particular, the inventors have found that the defined relative sizes lead to an optimum efficiency of the complete modular flow system. Indeed, a relative increase of the sizes of the vapor and/or liquid channels 17, 18 also implies a reduction of the active area (40, 40') of the membrane frame. However, due to the increased sizes of the vapor and/or liquid channels, more vapor can be transported to and from the active areas (i.e. the condensation / evaporation areas). Hence, the modular flow system may contain more frame elements in one stage and/or in one module (as described below in more detail) what increases the efficiency and the output of the flow system. The inventors have found that the described relative sizes lead to an optimum size balance leading to the best total efficiency of the modular flow system.

The inner region 40 is desirably bordered (i.e. covered) on its front and back side by a film, foil, or other heat transmitting but gas and liquid tight material. In particular, the central inner region 40 may be hollow or comprises a grid-like spacer. The film may be arranged, in particular welded, on the two sides of the spacer. The film may cover the total spacer but the passage openings and the channels may be kept free.

There is provided a vapor and/or liquid channel opening 22a between the vapor and/or liquid channel 17 and the inner region 40. Said vapor and/or liquid channel opening 22a may be e.g. a through hole inside an upper first frame wall of the inner frame 43. Said frame wall may hence separate the inner region 40 from the vapor and/or liquid channels 17, 18. Accordingly, vapor may be transported via a vapor and/or liquid channel 17 and the vapor and/or liquid channel opening 22a from or to the inner region 40.

Further, condensate collection passages 19a, 19b are arranged below the inner region 40. The central inner region may further be connected to at least one of the condensate collection passages by a condensate channel opening (or openings) 22b constituting a through hole in the inner frame. The condensed vapor generated inside said inner region when the vapor cools down may thus run out through the condensation collection passage.

On the left and or right side of the inner region at least one passage opening 14, 15 may be provided for other functions of the modular flow system than a distillation stage (as e.g. formed by the exemplary first and second frame elements shown in Fig. 6 and 3). For example, the passage opening 14, 15 may be used in a heat exchanger frame element, as described below.

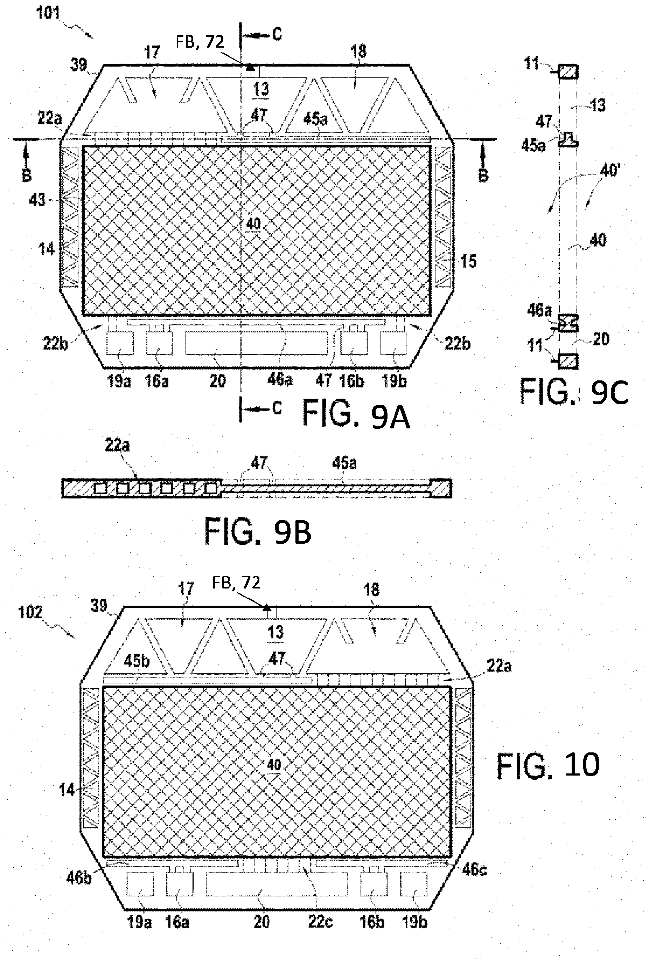

Below the inner region 40 and between the condensate collection passages 19a, 19b there may be arranged second passage openings 16a, 16b which are described in more detail in context of Fig. 9A.

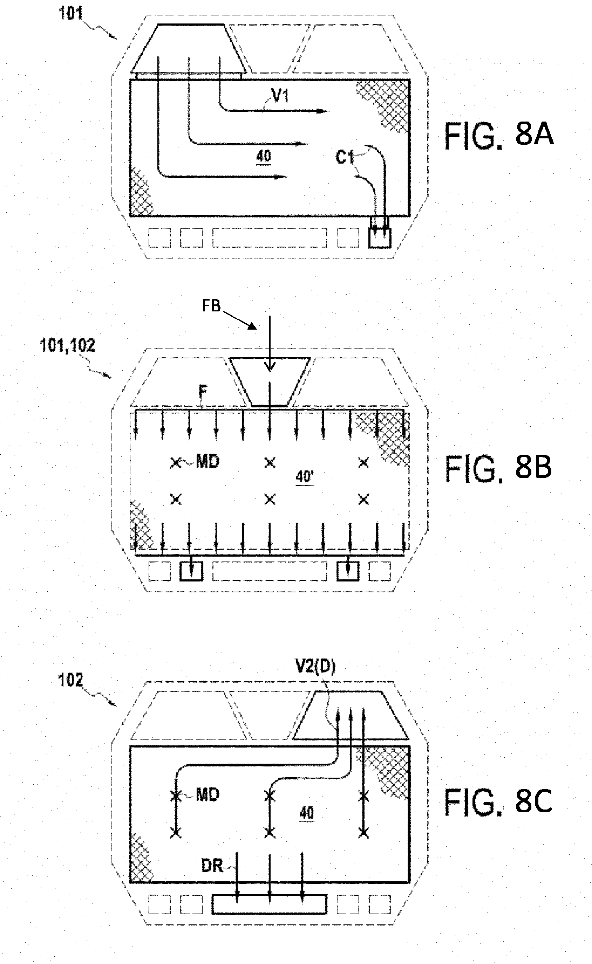

Further, below the inner region 40 and between the passage openings 16a, 16b there may be arranged a central drain passage which is described in more detail in context of Fig. 8C.

Moreover, the frame element 101 may comprise a first passage opening 13, e.g. between the two vapor and/or liquid channels 17, 18. As described in more detail below, a heated main feed F (i.e. feed liquid) may be supplied via the first passage opening 13 to a feeding area 40'. Moreover, the first passage opening 13 may be connected to an intermediate cooling device according to the present disclosure, in order to cool the feed F.

For example, there may be provided a channel opening 71 between the first passage opening 13 and an external intermediate cooling device (e.g. a tube connected to the channel opening 71 and supplying cooling feed liquid FB to the feed F). Said vapor channel opening 71 may be e.g. a through hole inside an upper first frame wall of the outer frame 39.

The channel opening 71 may consist of a plurality of channels (e.g. through holes), in order to better distribute and mix the cooling feed liquid FB with the feed F.

Since the channel opening may also be considered as part of the intermediate cooling device, and / or since the supply line of the cooling feed liquid may also be integrated into the frame (not shown in fig. 6), the intermediate cooling device may also (partially) be integrated into the frame element. In other words, the frame element may (at least partially) comprise the intermediate cooling device.

The intermediate cooling device may also be connected to at least one of the passage openings 16a, 16b (instead of to the first passage opening 13). The passage openings 16a, 16b forward the feed F to the subsequent stage (cf. also fig. 8B) and are hence connected to the first passage opening 13 of this subsequent stage. Hence, a feed F may also be cooled after passing feeding area 40', in order to be cooled before entering the subsequent stage.

Fig. 7 shows a schematic representation of a second frame element in particular with vapor and/or liquid channels according to embodiments of the present disclosure.

The frame element 102 is desirably again shown in a front view in the orientation it has in when being stacked in a modular flow system, i.e. in the same view as frame 101 of Fig. 6. The second frame element 102 may be to adjacent to the first frame element 101 in the modular flow system. Accordingly, the first and second frame element may be stacked. More desirably, a plurality of first frame elements 101 and a plurality of second frame elements 102 may be stacked alternately, as it is shown e.g. in Fig. 11.

The second frame element 102 principally corresponds to the first frame element 101. However, the inner region 40 of second frame element 102 is desirably bordered (i.e. covered) on its front and back side by a vapor-permeable (and liquid tight) membrane. Thus the border may serve to transmit vapor and block liquid (i.e. the feed).

Beside this, it might be possible that the second frame element 102 corresponds to the first frame element and is merely turned in Fig. 7 around a vertical symmetry axis. However, it is desired that the first and second frame elements comprise further structural differences, at least regarding the configuration of the liquid passages 45, 46 (as shown in Fig. 5 and 6).

As a further desired difference of the second frame element with regard to the first frame element, instead of the condensate channel openings 22b the frame element 102 comprises a drain channel opening (or openings) 22c constituting a through hole in the inner frame (i.e. a second frame wall below the inner region 40) connecting the central inner region 40 to the drain passage 20.

As further shown in Fig. 6 and 7, at least one of the vapor and/or liquid channels 17, 18 comprises at least one internal strut member 48a, 48b extending between the inner frame 43 and the outer frame 39. Hence, the structure of the frame element 101 is reinforced by the at least one internal strut member. Hence, the size of the vapor and/or liquid channels may be increased without decreasing the steadiness (stability) of the frame element.

In particular, the strut members may be provided to connect the outer frame with the inner frame what leads to a higher stability. Accordingly, the frame walls may be made thinner.

The at least one strut member may comprise at least one connecting internal strut member 48a connecting the inner frame 43 with the outer frame 39, and/or

at least one non-connecting internal strut member 48b protruding from the inner frame 43 toward the outer frame 39 or from the outer frame 39 toward the inner frame 43 without connecting the inner frame 43 with the outer frame 39.

In the present example of e.g. Fig. 6 the channel 17 comprises two non-connecting internal strut members 48b and the channel 18 comprises two connecting internal strut members 48a. In the present example of e.g. Fig. 7 the channel 17 comprises two connecting internal strut member 48a and the channel 18 comprises two non-connecting internal strut members 48b.

Like in the frame element 101, a first passage opening 13 in the frame element 102 may be connected to an intermediate cooling device according to the present disclosure, for example by means of a channel opening 71.

In Fig. 8A to 8C the process of a distillation using adjacent stacked frame elements 101 and 102 is shown. Generally, the inner region 40 (and desirably also the feeding area in front of the inner region in a front view of the frame element) may serve as the active area, in particular for membrane distillation. Said inner region and the feeding area may namely either be separated by a film, foil, or other heat transmitting and gas and liquid tight material, or by a vapor-permeable membrane. Hence, in case a film or there like is used, the border between inner region and feeding area may serve for heat transfer. In case a membrane is used, the border may serve to transmit vapor and block liquid (i.e. the feed).

Fig. 8A shows a schematic representation of the vapor and liquid flow in a first frame element 101 according to embodiments of the present disclosure. Vapor V1 is supplied by the first vapor and/or liquid channel and enters into the inner region 40 of the first frame element 101. Since this inner region 40 is bordered on its front and back side by a film, the vapor cannot pass the film (i.e. in a direction perpendicular to the frame element. Instead, the vapor condenses at the foil, such that a condensate (liquid) C1 runs out of the inner region into one or several condensate collection passages (19a and/or b). However, the heat of the vapor is transferred by the film to its opposite side, when the vapor condenses.

Fig. 8B shows a schematic representation of the feed flow F in between a first frame element 101 and a second frame element 102 according to embodiments of the present disclosure.

The frame elements 101, 102 are configured such (e.g. by the welding web structure(s) or another spacer element in between) that a gap remains between the frame elements when they are stacked in the modular flow system. This gap in particular forms a feeding area 40' being aligned with the inner regions of the stacked frame elements and being in front of and outside of the inner regions 40 of the adjacent frame elements.

Since the inner region 40 of the second frame element 102 is bordered on its front and back side by a vapor-permeable membrane, the feeding area 40' is bordered on a first side by a film (toward the first frame element 101) and on a second side by a vapor-permeable membrane (toward the second frame element 102).

A feed F is supplied via the first passage opening 13 to the feeding area 40'. Said feed may be a liquid, e.g. salt water or dirt water which is distilled and/or cleaned by the modular flow system. The feed may have a temperature slightly lower than the vapor V1, e.g. a difference of 4 to 6°C, in particular due to the use of an intermediate cooling device according to the present disclosure.

Due to the heat transferred from the condensing vapor V1, the feed F is heated and vaporizes. In this regard it is possible that the pressure within the feeding area or in parts of the modular flow system is reduced such that the feed boils when heated. The vapor passes the vapor-permeable membrane what leads to a distillation, e.g. membrane distillation MD.

As described above, a cooling feed liquid FB may be supplied to the feed F by an intermediate cooling device (not shown in fig. 8B). The feed F may be mixed with the cooling feed liquid FB, in order to decrease the temperature of the resulting feed F which enters into the feeding area 40'. It is desirable that the resulting feed F has a homogenous (cooled) temperature before entering into the feeding area 40'.

Fig. 8C shows a schematic representation of the vapor and liquid flow in the second frame element 102 adjacent to the first frame element 101 according to embodiments of the present disclosure.

Due to the distillation, vapor enters from the feeding area 40' into the inner region 40 of the frame element 102. Said vapor may have a slightly lower temperature than the vapor V1, e.g. 2 to 3°C and leaves the inner region 40 via the second vapor and/or liquid channel 18.

The arrangement shown in Fig. 8A to 4C shows a first stage of the modular flow system. Said vapor leaving the second frame element 102 may be transmitted to a second stage of the modular flow system where it may be used as (heating) vapor in a first frame element 101 again. Thus, the modular flow system may have several stages (e.g. 10 or more) wherein in each subsequent stage the temperatures of the supplied vapor and feed are slightly decreased with regard to the preceding stage.

As further shown in Fig. 8C, in case any feed undesirably passes the membrane (e.g. due to defects in the membrane) said feed (i.e. leakage) DR can leave the inner region 40 of the second frame element via the drain passage 20. Due to the arrangement of the vapor and/or liquid channel 18 above the inner region 40, the whole inner region 40 may serve as a barrier for leakage. In other words, the leakage would need to fill the complete inner region, in order to pass the barrier given by the configuration of the frame element, i.e. to flow into the vapor and/or liquid channel 18. Hence, any contamination of the final product (i.e. the distillate) can be effectively prevented.

Fig. 9A shows a schematic representation of a first frame element 101 in particular with liquid passages 45a, 46a according to embodiments of the present disclosure.

The liquid passages 45, 46 are desirably provided (e.g. as notches) on a first upper frame wall and a second lower frame wall of the inner frame 43. The first upper frame wall may separate the vapor and/or liquid channels 17, 18 and the first passage opening 13 from the inner region 40. The second lower frame wall may separate the passages 19, 20 and openings 16 from the inner region 40.

A first liquid passage 45 is provided by the first upper frame wall and is configured to distribute a feed from the first passage opening 13 to the feeding area 40'. The liquid passage 45 may extend asymmetrically by extending from a central section of the first frame side (below the first opening 13) into only one first direction along the first frame side (e.g. in Fig. 9A to the right) without extending into the opposite direction. The first liquid passage 45 may be connected to the first passage opening 13, in particular by connecting notches 47 provided on a front side of the first upper frame wall or a connecting channel provided inside said frame wall.

A second liquid passage 46 is provided by the second lower frame wall and is configured to collect a liquid from the feeding area 40' to the passage openings 16a, 16b. The second liquid passage 46 may extend discontinuously by extending only across the central region but not across the peripheral regions of the second lower frame wall. The second liquid passage 46 may be connected to the second passage openings 16a, 16b, in particular by a connecting notches 47 provided on a front side of the second lower frame wall or a connecting channel provided inside the second lower frame wall.

Fig. 9B shows a cross section of the first frame element of Fig. 9A along the line B-B. It is noted that Fig. 9B only shows the front side structure of the frame element 101 but does not consider its structure on the back side (as it is shown e.g. in Fig. 9C). Said back side structure may be symmetrical to the shown front side structure.

Fig. 9C shows a cross section of the first frame element of Fig. 9A along the line C-C. Fig. 9C schematically shows the structure of the frame element 101 on its front side and on its back side. As it can be seen, the front and back side of the frame elements can correspond to each other, desirable they are symmetric in a top view of the frame elements (which corresponds to the direction of view in Fig. 9B). In other words a frame element may be symmetric to a center plane of the frame element which is parallel to a plane defined by the front or back side of the frame element.

As it is shown in 5C, a feed supplied by the first opening 13 can enter the notch 45a via the connecting notch 47. Due to a barrier on the lower side of the notch (shown in Fig. 9C) which actually forms one side wall of the notch (or cavity) 45a, the feed is first fills the notch before it enters the (relatively thin) feeding area 40' by passing the barrier.

Fig. 10 shows a schematic representation of a second frame element 102 in particular with liquid passages 45, 46 according to embodiments of the present disclosure;

As shown, the second frame elements desirably comprises complementary liquid passages 45, 46, such that the liquid passages of stacked first and adjacent second frame elements 101, 102 form together a liquid passage extending across (i.e. over the full length of) the complete first upper and second lower sides the feeding area 40' (regarding peripheral liquid passages 46b, this is only schematically shown).

Accordingly, the liquid passage 45 of the second frame element 102 may extend asymmetrically by extending from a central section of the first frame side (below the first opening 13) into only a second direction along the first frame side (e.g. in Fig. 10 to the left) without extending into the opposite first direction.

A second liquid passage 46 of the second frame element 102 may extend discontinuously by extending only across the peripheral regions of the second lower frame wall but not across the central region.

As a consequence, it is possible to provide channel openings 22a, 22b, 22c constituting through holes in the inner frame in those areas where no liquid passage is provided. As a consequence, there is no interference of the liquid passage and the other function. Hence, the thickness of the frame wall (in particular in a front view of the frame member) may be reduced and hence, desirably of the complete frame element. As a consequence, more frame elements may be used in a modular flow system and the heat transfer may be increased due to the reduced thickness. This leads to a higher efficiency and an increased output of the flow system.

In correspondence to the description above in context of fig. 6 and 7, the first passage opening 13 may be connected to an intermediate cooling device according to the present disclosure, for example by means of a channel opening 72. The channel opening 72 in this example may consist of a single through hole, what may be for example a simple modification of an existing, conventional frame element, in order to connect it with an intermediate cooling device according to the present disclosure.

Fig. 11 shows a schematic representation of a multistage distillation system, in particular comprising a modular flow system, according to embodiments of the present disclosure.

The multistage distillation system 5000 comprises a plurality of multistage distillation modules 500, 600. The modules are configured to be flowed through in parallel by a liquid (i.e. a feed, e.g. salt or dirt water) F to be concentrated. The modules are also supplied in parallel by a (heating) steam V1, as described below.

Each module comprises a plurality of serial condensation/evaporation stages 50, 60 etc. configured to be flowed through in series by the liquid to be concentrated. This is shown in Fig. 11 for module 500 only. Further stages may be subsequently connected in series to stage 60.

A steam (i.e. vapor) V2 generated in a first stage 50 may be supplied to a subsequent second stage 60 to heat said second stage. In this way the stages are also (at least functionally) connected (or coupled) in series with regard to the steam V1, V2. The steam supplied to the first stage (by the centralized heating stage 300) may have a temperature of 80-85°C. The temperature difference between an incoming and a generated outgoing steam in a stage (i.e. V1 and V2) may be 4-5°C. Accordingly, in case the steam supplied to the last stage has 40-45°C, it is possible that a module comprises 8 to 10 stages.

Each condensation/evaporation stage 50, 60 etc. comprises a plurality of parallel condensation/evaporation elements 101, 102 configured to be flowed through in parallel by the liquid to be concentrated. Desirably the condensation/evaporation elements 101, 102 are also configured to be flowed through in parallel by the steam. This is schematically shown in Fig. 11 for condensation/evaporation stage 50, 60.

Each condensation/ evaporation element comprises at least one condensation unit 101 (e.g. a first frame element 101) and at least one evaporation unit 102 (e.g. a second frame element 102), as shown in stages 50 and 60. In the example of Fig. 11 two condensation/evaporation elements are shown which are formed each by an evaporation unit 102 sandwiched by two condensation units 101. Accordingly, the condensation/evaporation elements share a condensation unit 101 arranged between them.

It is noted that a stage may comprise a hundred parallel condensation/evaporation elements or more, i.e. more than hundred condensation units 101 (e.g. first frame elements 101) and evaporation units 102 (e.g. second frame elements 102).

Accordingly, the apparatus may be or comprise at least one modular flow system according to the present disclosure. Also each module 500, 600 may be a modular flow system according to the present disclosure.

A stage 50, 60 may be terminated on its both ends by covers (i.e. closing frame members) 103, which close at least some of the openings, channels, passages, etc. in the outmost frame members 101, 102 (in Fig. 11 frame members 101).

The multistage distillation system 5000 has thus a hierarchical organization with three levels. On the first highest lever, the apparatus comprises a plurality of parallel multistage distillation modules 500, 600. On the second (lower) level, the apparatus comprises a plurality of serial condensation/evaporation stage 50, 60. On the third (lowest) level, the apparatus comprises a plurality of parallel condensation/evaporation elements 101, 102. A condensation/evaporation element may comprise a first frame element 101 and a second frame element 102.

Due to this arrangement the apparatus may comprise up to several thousand condensation/evaporation elements, e.g. by simply combining several thousand first and second frame elements, respectively.

The apparatus 5000 may further comprise a centralized heating stage 300 configured to generate steam (i.e. a vapor) and to provide the steam to each of the modules in parallel, and/or a centralized condensation stage 400 configured to receive steam from each of the modules in parallel and to condensate the steam.

Furthermore, by providing such an apparatus, it is possible that several modules commonly use a centralized (or single) heating stage and/or a centralized (or single) condensation stage. Therefore the energy consumption of the centralized (or single) heating stage and/or a centralized (or single) condensation stage may be shared by a plurality of parallel modules what leads to an optimized energy efficiency of the apparatus and at the same time (due to the use of more than one module) to a higher total output of the apparatus.

The centralized heating stage 300 generates steam (i.e. a vapor) and provides the steam to each of the modules in parallel. Accordingly the modules are heated with the supplied steam. In comparison to heating with supplied (hot) liquid, this has the advantage that due to the thermodynamics steam will automatically be attracted most by the coldest surface in a steam space (in the present case the steam channel from the heating stage 300 to the condensation units 101 of each module's first stage). Hence, a module which is colder than the others will automatically be heated more. As a consequence, the temperature of the modules is automatically balanced.

In comparison, heating with (hot) liquid would require a very precise control implying high effort and reduced reliability.

The same applies to a centralized condensation stage 400. Due to thermodynamics the vapors (or steams) generated in the last stage of each module will automatically be attracted by the centralized condensation stage depending on the temperature of the vapors. Hence, a module which generates hotter vapor (or steam) in its last stage will automatically supply more steam to the centralized condensation stage and will therefore be cooled more than the other (colder) modules. As a consequence, the temperature of the modules is automatically balanced. In other words, the set temperature of the modules can be automatically controlled.

The centralized heating stage 300 may be configured to provide the steam in each module to a first stage 50 of the serial condensation/evaporation stages. Accordingly, the first stage of each module may be heated by the centralized heating stage.

In particular; the steam is provided in each module to the condensation units 101 of the first stage in parallel. Said condensation units of the first stages are thus heated to a first predetermined temperature, e.g. in the range of 80-85°C.

Accordingly, the condensation units of a first stage 50 of each module may be heated by the generated steam. Condensation units of subsequent stages 60 may be heated with the steam (vapor) generated in preceding stages 50. The feed F may be heated to a second temperature which is slightly lower than the temperature of the generated steam, e.g. 4 to 6°C lower (e.g. due to the use of an intermediate cooling device according to the present disclosure, as described in more detail below). In this way the steam V1 can heat the feed F in the first stage such that the liquid vaporizes and passes the membrane walls of the evaporation units 102, thereby causing a distillation.

The system further comprises an intermediate cooling device 74, 75. The intermediate cooling device may be at least partially external to or may comprise external elements to the frame elements 101, 102, e.g. one or several tubesor other external feed line.

Accordingly, the system may comprise a feed liquid distribution device configured to feed the main feed liquid F from a source S to the heating stage and/or the first stage 50 (where it may be heated), and the cooling feed liquid FB to the intermediate cooling device. For example, the feed liquid distribution device may comprise one or several tubes 73 (other lines to further stages and/or other modules 600 are not shown in fig. 11, may be added to the system). The main feed liquid and the cooling feed liquid may thus originate from the same source S. The cooling feed liquid may e.g. correspond to the main feed liquid before being heated.

For example, the (external) intermediate cooling device 74 may be or may comprise a Y- or T-tube 73 which combines the cooling feed liquid FB with the main feed liquid F (e.g. flowing in a first passage opening 13), such that the resulting (cooled) feed liquid F enters the feeding areas 40' of the second stage 60 (or optionally of any of the subsequent stages).

Alternatively, the (external) intermediate cooling device 74 may be or may comprise a feed channel which feeds the cooling feed liquid into the module 500 or a stage via a cover plate from a front side of the stack of frame elements of the module /stage (not shown in fig. 11). For example, the module may comprise at least one additional frame element (not shown in fig. 11) between two adjacent stages 50, 60, wherein the intermediate cooling device is integrated into and/or provided by the additional frame element.

It is further possible that the intermediate cooling device comprises a heat exchanger 75 integrated into at least one frame element (not shown in fig. 11). Such a frame element may also be referred to as a heat exchanger frame element.

The heat exchanger frame element may comprise a first area 40' configured to be flowed through by the main feed F and a second area (e.g. corresponding to an inner region 40 according to the present disclosure) configured to be flowed through by the cooling medium and/or cooling feed liquid FB. The first and second areas may be e.g. separated by a wall (e.g. a foil, polymer foil or other relatively thin wall) such that heat is transferred from the main feed liquid to the cooling medium and/or cooling feed liquid.

For example, the main feed may for instance flow between two walls from a first passage opening 13 to second passage opening(s) 16a, 16b (or vice versa). The cooling medium and/or cooling feed liquid FB may flow adjacent to the main feed (i.e. on the other side of one or two of the walls between which the main feed flows) between further passage openings 14 and 15 (or vice versa). Thus this frame element may merely serve as a heat exchanger, without e.g. an evaporation function.

However, it is also possible that the intermediate cooling device comprises an external heat exchanger being external to the module and configured to cool the main feed liquid between two stages (not shown in fig. 11). For example, the external heat exchanger may comprise a main feed line being external to the frame elements and connected to at least two different stages such that the main feed liquid is cooled between two stages 50, 60. Said main feed line be in particular adjacent to a cooling feed line carrying the cooling medium and/or cooling feed liquid such that a heat transfer is possible.

The centralized condensation stage 400 may be configured to receive steam from a last stage of the serial condensation/evaporation stages 50, 60 of each module.

In particular, the centralized condensation stage 400 may be configured to receive steam from the evaporation units 102 (of each last stage) in parallel, in particular for cooling said evaporation units to a third predetermined temperature, e.g. in the range of 30 to 35°C, being lower than the first and the second predetermined temperatures. Accordingly, the evaporation units 102 of a last stage of each module may be cooled by the centralized condensation stage. Evaporation units 102 of preceding stages 50 may be cooled by subsequent stages 60 (i.e. the condensation units 101 of subsequent stages).

Each of the condensation units 101 may comprise a first steam space corresponding to the inner region 40 of the frame element 101 at least partly limited by a condensation wall, in particular a film. Accordingly, a condensation unit may be a first frame element 101, as described above.

Each of the respective evaporation units 102 may comprise a second steam space corresponding to the inner region 40 of the frame element 101 at least partly limited by a steam-permeable, liquid tight membrane wall. Accordingly, a evaporation unit may be a second frame element 102, as described above.

At least one flow channel (formed by a feeding area 40' between adjacent frame elements 101, 102) for the liquid to be concentrated may be provided between a condensation unit 101 and an adjacent evaporation unit 102 such that the liquid inside the flow channel is heated via the condensation wall and the steam arising from the liquid to be concentrated moves through the membrane wall into the second steam space.

It is noted that for simplicity reasons the schematic illustration of Fig. 11 does not show any channels, in which the condensate C can flow out of the condensation units 101 (e.g. via condensate collection passages 19a, 19b). This condensate C may constitute, in particular together with the condensed vapor Vn in the centralized condensation stage 400, the final product of the apparatus (i.e. the distillate). Said final product may be collected in a container (not shown in Fig. 11). Furthermore Fig. 11 does not show a drainage channel which may be configured to guide the drainage DR of the evaporation units 102 (e.g. via the drain passages 20) to a drainage container or to recirculate it to the feed supply channels which supply the feed F to the apparatus.

In the example of Fig. 11 in each condensation/evaporation stage 50, 60 the evaporation units 102 and condensation units 101 are stacked alternately. The evaporation units 102 have steam outlet passages in form of the vapor and/or liquid channels 18 connected with another, in particular facing one another and/or being aligned with each other. The condensation units 101 have steam inlet passages in the form of the vapor and/or liquid channels 17 connected with another, in particular facing one another.

The evaporation units 102 further comprise passage openings in the form of the vapor and/or liquid channels 17 facing the steam inlet passages 17 of the condensation units 101. The condensation units also comprise passage openings in the form of the vapor and/or liquid channels 18 facing steam outlet passages 18 of the evaporation units 102. Said passage openings are hence vapor and/or liquid channels 17, 18 which are not connected to the inner region by channel openings 22a. In other words, in an evaporation unit 102 the steam outlet passage 18 and the passage opening 17 are be symmetrical, and in an condensation unit 101 the steam inlet passage 17 and the passage opening 18 are symmetrical.

Since the vapor and/or liquid channels, and also the further openings and passages 13 to 16 and 19, 20 match each other in both frame elements 101, 102. Hence, each condensation/ evaporation element comprises a single stack of frame elements providing the respective condensation units and evaporation units of the condensation/ evaporation element. Furthermore, also each condensation/evaporation stage 50 is formed by a single stack of frame elements providing the parallel condensation/ evaporation elements.

By this configuration a set of parallel connected evaporation and condensation units can be obtained in a stage.

Furthermore, as shown in the example of Fig. 11, the steam outlet passages 18 of the evaporation units 102 of a preceding stage 50 may be connected to the steam inlet passages 17 of the condensation units 101 of a successive stage 60 for forming a steam channel providing steam from the preceding stage to the successive stage. Hence, the subsequent stage 60 can be heated by the steam generated in the preceding stage 50. At the same time, said steam is the distillate (e.g. distilled and hence cleaned water).

Said units 101, 102 may be in particular arranged such that the respective steam outlet passages 18 of the preceding stage 50 and the respective steam inlet passages 17 of the successive stage face 60 one another. This is e.g. possible by turning the frame elements of a subsequent stage around their vertical symmetry axis. Therefore each module can be formed by a single stack of frame elements.

Consequently, the heating steam V1 (e.g. generated by a centralized heating stage) can be easily supplied to each module 500, 600. The heating steam may namely be supplied only to the first frame element (forming a condensation unit 101) of a stacked module 500 (the outset closing frame members 103 may have a respective opening to allow the heating steam to enter the vapor and/or liquid channel 17 of the first frame member 101). In this way, the steam V1 is supplied to the parallel condensation units 101 of the first stage 50 of the module 500. The same applies to the steam generated in the last stage which may be supplied e.g. to a centralized condensation stage 400. The centralized condensation stage may be connected to the vapor and/or liquid channel 18 of the last frame element of the module stack. Said last frame element may e.g. form a condensation unit 101.

Therefore the overall structure of the apparatus can be simplified and made more compact what enhances its efficiency, in particular with regard to the energy consumption.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A multistage distillation system for concentrating a feed liquid, comprising:
at least one module being assembled by a stack of frame elements (101, 102), wherein each module comprises at least one stage, such that the system comprises in total a plurality of stages (50, 60) configured to be flowed through in series by a main feed liquid, wherein
each stage of the plurality of stages (50, 60) is configured to generate steam and feed the steam to a subsequent stage,
the first stage of the plurality of stages (50, 60) is configured to heat the main feed liquid and/or to be fed with heated main feed liquid, and
the system further comprising an intermediate cooling device configured to cool the heated main feed liquid before flowing to at least one of the second to last stages of the plurality of serial stages (50, 60).

2. The system according to claim 1, wherein
the intermediate cooling device is configured to cool the main feed liquid by heat transfer to a cooling feed liquid and/or by mixing with a cooling feed liquid.

3. The system according to claim 1 or 2, wherein
the intermediate cooling device comprises a feed liquid mixer configured to feed a cooling feed liquid to the main feed liquid before flowing to at least one of the second to last stages, and/or
the intermediate cooling device comprises a heat exchanger configured to allow a heat transfer from the main feed liquid to a cooling medium and/or cooling feed liquid before flowing to at least one of the second to last stages.

4. The system according to any one of the preceding claims, wherein the intermediate cooling device is integrated into and/or provided by one or several frame elements, and/or
the intermediate cooling device is external to or comprises external elements to the frame elements.

5. The system according to the preceding claim, wherein
each stage comprises at least two adjacent frame elements provided by the stack of frame elements, wherein the intermediate cooling device is integrated into and/or provided by at least one frame element of a stage, and/or
the module comprises at least one additional frame element between two adjacent stages, wherein the intermediate cooling device is integrated into and/or provided by the additional frame element.

6. The system according to any one of the preceding claims 3 to 5, wherein
the intermediate cooling device comprises an integrated heat exchanger integrated into at least one frame element, wherein the at least one frame element comprises a first area configured to be flowed through by the main feed and a second area configured to be flowed through by the cooling medium and/or cooling feed liquid, wherein the first and second areas are separated by a wall such that heat is transferred from the main feed liquid to the cooling medium and/or cooling feed liquid.

7. The system according to any one of the preceding claims 3 to 6, wherein
the intermediate cooling device comprises an external heat exchanger being external to the module and configured to cool the main feed liquid between two stages.

8. The system according to any one of the preceding claims 3 to 7, wherein
the cooling feed liquid is fed to a heating stage of the system after having been warmed in the heat exchanger.

9. The system according to any one of the preceding claims 3 to 8, wherein
the intermediate cooling device comprises a feed liquid mixer being at least partially external to the module, wherein
the feed liquid mixer comprises a cooling liquid line configured to feed the cooling feed liquid, the cooling liquid line being external to the frame elements and connected to at least one opening in the module which is arranged such that the cooling feed liquid is fed to the main feed liquid.

10. The system according to any one of the preceding claims, wherein each stage comprises at least one condensation unit (101) comprising a first steam space (40) at least partly limited by a condensation wall.

11. The system according to any one of the preceding claims, wherein each stage comprises at least one evaporation unit (102) comprising a second steam space (40) at least partly limited by a steam-permeable, feed tight membrane wall.

12. The system according to any one of the preceding claims, wherein the main feed liquid and the cooling feed liquid originate from the same source, and/or
the cooling feed liquid corresponds to the main feed liquid before being heated.

13. The system according to any one of the preceding claims, further comprising a heating stage configured to:
generate steam and feed the steam to the first stage, and/or
heat the main feed liquid and feed it to the first stage.

14. The system according to the preceding claim, wherein
the heating stage is or comprises a vapor compressor configured to generate steam and feed the steam to the first stage.

15. The system according to any one of the preceding claims, wherein the system comprises a feed liquid distribution device configured to:
feed the main feed liquid from the source to the heating stage and/or the first stage, and
the cooling feed liquid to the intermediate cooling device.
